# EUROPÄISCHE PATENTSCHRIFT

(11) **EP 1 439 131 B1**
(45) Veröffentlichungstag und Bekanntmachung des Hinweises auf die Patenterteilung: **27.09.2006**
(21) Anmeldenummer: 04000428.5
(22) Anmeldetag: 12.01.2004
(51) Int. Cl.: B65D 77/06, B29C 49/22

(54) **Behälteranordnung für Transport und Lagerung leicht entzündlicher, fliessfähiger Stoffe und Verfahren zu seiner Herstellung**
Container assembly for transport and storage of easily inflammable flowing substances and method of producing the same
Ensemble conteneur pour le transport et stockage de substances fluides facilement inflammables et procédé de production du même

(30) Priorität: 15.01.2003 DE 10301217
(43) Veröffentlichungstag der Anmeldung: 21.07.2004
(73) Patentinhaber: Schneider, Ekkehard, Dipl.-Ing., 57610 Altenkirchen (DE)
(72) Erfinder: Schneider, Ekkehard, Dipl.-Ing., 57610 Altenkirchen (DE)
(74) Vertreter: Maxton Langmaack & Partner

(56) Entgegenhaltungen:
- EP-A- 1 245 503
- DE-A- 2 914 478
- DE-A- 10 013 000
- US-A- 5 478 616
- US-A- 5 759 649

## Beschreibung

Behälteranordnungen für Transport und Lagerung von fließfähigen Stoffen, insbesondere Flüssigkeiten, bestehen in der Regel aus einem palettenförmigen Untergestell und einem darauf aufgesetzten und von einem Schutzgitter umschlossenen Kunststoffbehälter. Bei derartigen Kunststoffbehältern besteht die Gefahr, daß infolge Reibung mit dem Füllgut die Behälteroberflächen eine elektrostatische Ausladung erfahren. Bei der Verwendung derartiger Behälteranordnungen für Flüssigkeiten, deren Dämpfe leicht entzündlich sind, oder bei der Verwendung derartiger Behälteranordnungen in Bereichen, die aus anderen Gründen als explosionsgefährdet einzustufen sind, besteht die Gefahr, daß durch eine Entladung der elektrostatischen Aufladung der Behälteroberfläche unter Funkenbildung eine Explosion ausgelöst werden kann.

Zur Vermeidung dieser Gefahr ist aus DE 202 06 436 U eine Behälteranordnung der vorbezeichneten Art bekannt, bei der der Kunststoffbehälter mit einer dauerantistatischen Außenschicht aus einem Kunststoff mit einem Leitrußanteil versehen ist. Damit sind elektrische Entladungen unter Funkenbildung zwischen dem Behälter und dem Untergestell und/oder dem Schutzgitter ausgeschlossen. Ein Nachteil der vorbekannten Behälteranordnung besteht darin, daß durch den Leitrußanteil in der Außenschicht, ggf. auch in der Wandung des Behälters selbst infolge der Zumischung von leitrußhaltigen Kunststoffabfällen die Behälterwandungen undurchsichtig sind, so daß eine optische Füllstandskontrolle nicht möglich ist. Um dies zu erreichen, ist ein aufwendiges Herstellungsverfahren vorgesehen, durch das vorzugsweise in den Eckenbereichen beim Extrusionsvorgang in den aus im wesentlichen undurchsichtigen Kunststoffmaterial bestehenden schlauchförmigen Rohling ein Streifen aus durchscheinendem oder durchsichtigen Kunststoffmaterial eingebracht wird. Hierdurch besteht jedoch die Gefahr, dass bei der stofflichen Verbindung zwischen dem Sichtstreifenmaterial und dem angrenzenden undurchlässigen Kunststoffmaterial infolge von Inhomogenitäten nicht die gleiche Festigkeit erreicht wird wie die der übrigen Wandbereiche.

EP 1 245 503 A1 offenbart die Verwendung elektrisch leitfähiger Polymere für Transportverpackungen, wobei besonders vorteilhaft ist, wenn die Polymere als Lack auf der Kunststoffverpackung aufgebracht sind. Dies ermöglicht es, im Nahtbereich zwei reine Polymermaterialien miteinander zu verbinden, ohne dass in diesem Bereich Polymere auftreten, die die Festigkeit der Nahtstelle beeinträchtigen können. Der Lack wird vorteilhafterweise erst nach der Erstellung der Nahtstelle auf den fertigen Kunststoffhohlbehälter aufgebracht.

DE 100 13 000 A1 offenbart im Blasformverfahren hergestellte Behälter, welche eine Außen- und Innenwand aufweisen, wobei Innenwandbahnen elektrisch leitfähiges Material aufweisen. Als elektrisch leitfähiges Material werden vorgeschlagen Metalle in jeder Form oder mit Metallspänen oder Metallfäden oder Kohlenstofffasern oder leitfähigem Ruß in ausreichender Menge gefüllte, selbst nicht leitfähige Polymere oder intrinsisch elektrisch leitfähige Kunststoffe wie substituierte Polythiophene oder ähnliche Polymere mit konjugierten Doppelbindungen.

US 5,759,649 offenbart ganz allgemein Verpackungsbehälter mit einer Verbundfolienkombination, wobei dieser Verpackungsbehälter dreilagig ausgebildet ist und eine Zwischenschicht aufweist, welche aus elektrisch leitfähigem Material aufgebaut ist. Als mögliche leitfähige Materialien für diese Zwischenschicht kommen u.a. intrinsisch leitfähige Polymere auf der Basis von Polyacetylen, Polypyrol, Polyparaphenylen, Polyparaphenylen-Sulfid, Polythiophen oder Schadtransferkomplexe in Frage.

Der Erfindung liegt die Aufgabe zugrunde, einen gegen elektrostatische Aufladungen geschützten Behälter für eine derartige Behälteranordnung zu schaffen, die die vorstehenden Nachteile vermeidet.

Diese Aufgabe wird erfindungsgemäß gelöst durch eine gegen elektrostatische Aufladung geschützte Behälteranordnung für Transport und Lagerung von fließfähigen Stoffen, mit einem palettenartigen Untergestell aus einem elektrisch-leitfähigem Material und einem damit verbundenen Schutzgitter aus einem elektrisch-leitfähigen Material, das die Seitenwände eines Behälters umschließt, dessen Wandungen durch die Herstellung im Blasverfahren mehrschichtig aufgebaut sind und aus einer tragenden Basisschicht und zumindest einer Schicht aus einem Kunststoffmaterial mit elektrisch eigenleitenden (intrinsischen) Eigenschaften bestehen, wobei das Kunststoffmaterial mit intrinsischen Eigenschaften aus einer Mischung eines elektrisch nichtleitenden Kunststoffs als Basiskunststoff mit einem intrinsischen Kunststoff besteht.

Der Vorteil besteht hierbei darin, dass ein Kunststoffmaterial eingesetzt wird, das von sich aus elektrisch-leitende (intrinsische) Eigenschaften besitzt, so dass die Zumischung von leitfähigen Stoffen, wie beispielsweise Leitruß, vermieden wird. Ein weiterer Vorteil besteht darin, dass derartige Kunststoffmaterialien mit elektrisch-eigenleitenden (intrinsischen) Eigenschaften durchscheinend sind, so dass die Wandungen eines aus einem derartigen Material hergestellten Behälters eine allseitige optische Füllstandskontrolle ermöglichen. Ein weiterer Vorteil besteht darin, dass die Wandungen eines derartigen Behälters keinerlei Unterbrechungen in ihrer stofflichen Zusammensetzung aufweisen und dementsprechend eine zuverlässige Eigenfestigkeit aufweisen. Als Vorteil ist auch anzusehen, dass nach Abschluß der Fertigung von erfindungsgemäßen Behältern ohne aufwendige Reinigung der Extruder auch andere Behälter anschließend hergestellt werden können.

Es hat sich herausgestellt, dass zur Sicherung gegen elektrostatische Aufladungen bereits eine geringe intrinsische Eigenschaft des verwendeten Kunststoffmaterials notwendig ist, so dass das Kunststoffmaterial mit intrinsischen Eigenschaften aus einer Mischung eines elektrisch-nichtleitendem Kunststoffes als Basiskunststoff mit einem intrinsischen Kunststoff besteht. Das bedeutet, dass der intrinsische Kunststoff mit seiner hohen elektrischen Leitfähigkeit durch die Vermischung mit dem elektrisch-nichtleitenden Kunststoff entsprechend "verdünnt" werden kann. Damit können zum einen für das Basismaterial bewährte Kunststoff mit hoher mechanischer Eigenfestigkeit eingesetzt werden, so dass die im Vergleich hierzu etwas geringere Festigkeit der intrinsischen Kunststoffe mehr als ausgeglichen wird. Da intrinsische Kunststoffe im Verhältnis zu üblichen Kunststoffen sehr teuer sind, ergibt sich als weiterer Vorteil eine erhebliche Kostenreduzierung, da in die Mischung mit dem Basiskunststoff nur so viel an intrinsischem Kunststoff eingemischt werden muss, dass die geforderte Ladungsdichte auf der Behälteroberfläche von max. 40 Nano-Coulomb pro Quadratzentimeter eingehalten werden kann.

Im Sinne der vorliegenden Erfindung wird der Begriff "Kunststoff" für den genuinen Kunststoff verwendet, während der Begriff "Kunststoffmaterial" für eine Mischung aus mehreren Kunststoffen verwendet wird. Dementsprechend bedeutet der Begriff "Kunststoffmaterial mit intrinsischen Eigenschaften" eine Mischung aus einem elektrisch-nichtleitenden Kunststoff mit einem Kunststoff, der aufgrund seiner molekularen Struktur elektrisch-leitende, d. h. intrinsische Eigenschaften besitzt. Der Zusatz von leitfähigen Materialien aus Leitruß o.ä. oder die Einbringung von Drahtgeweben entfällt. Derartige Zusätze fallen im Sinne dieser Erfindung nicht unter den Begriff der elektrischeigenleitenden Kunststoffmaterials.

In Ausgestaltung der Erfindung ist hierbei vorgesehen, dass als Basiskunststoff ein Polyethylen, insbesondere ein High-density-Polyethylen (HDPE) verwendet wird.

In Ausgestaltung der Erfindung ist vorgesehen, dass der Anteil in intrinsischem Kunststoff an dem aus dem Basiskunststoff und dem intrinsischen Kunststoff bestehenden Kunststoffmaterial mit intrinsischen Eigenschaften max. 50 Vol% beträgt. Weitere Anteile sind in den Unteransprüchen angegeben.

Während es grundsätzlich möglich ist, den Behälter einschichtig aus einem Kunststoffmaterial mit intrinsischen Eigenschaften herzustellen, ist gemäß der Erfindung vorgesehen, dass die Wandungen des Behälters mehrschichtig aufgebaut sind und aus einer tragenden Basisschicht und zumindest einer Schicht aus einem Kunststoffmaterial mit intrinsischen Eigenschaften bestehen. Bevorzugt besteht hierbei die Außenschicht aus dem Kunststoffmaterial mit intrinsischen Eigenschaften. Damit ist die Möglichkeit gegeben, den Behälter in bezug auf die Festigkeitsanforderungen in seiner tragenden Basisschicht aus einem entsprechenden Kunststoff, beispielsweise High-density-Polyethylen herzustellen, so dass nur die Beschichtung, beispielsweise auf der Außenfläche, aus dem Kunststoffmaterial mit intrinsischen Eigenschaften besteht. Da an die Außenschicht praktisch keine Festigkeitsanforderungen gestellt werden, kann eine verhältnismäßig dünne Beschichtung vorgesehen werden, die beispielsweise max. 1 mm, in den Eckenbereichen aber auch darunter liegen kann, da für die Außenschicht nur die elektrisch leitenden Eigenschaften dieses Kunststoffmaterials gefordert sind. Ein weiterer Vorteil besteht darin, dass die den tragenden Teil der Wandungen des Behälters bildende Basisschicht hinsichtlich ihres Materials auch auf die Anforderungen an chemische Resistenz gegenüber den zu transportierenden Gütern ausgewählt werden kann.

In einer bevorzugten Ausgestaltung der Erfindung ist vorgesehen, daß die Basisschicht aus dem gleichen nicht-leitenden Kunststoff besteht, der auch in der Kunststoffmischung enthalten ist. Dadurch ist eine einwandfreie Bindung der aus einem Kunststoff mit intrinsischen Eigenschaften bestehenden Schicht mit dem Basismaterial gewährleistet.

Die Erfindung betrifft ferner ein Verfahren zur Herstellung eines Transportbehälters für eine Behälteranordnung gemäß der Erfindung unter Verwendung eines Kunststoffmaterials mit elektrisch eigenleitenden (intrinsischen) Eigenschaften, das dadurch gekennzeichnet ist, daß ein Teil eines intrinsischen Kunststoffs als Master-Batch mit einem Anteil eines elektrisch-nichtleitenden Basiskunststoffs in einem vorgebbaren Volumenverhältnis in einem Extruder zu einem Kunststoffmaterial mit intrinsischen Eigenschaften gemischt wird und daß das durch die Mischung gebildete Kunststoffmaterial mit intrinsischen Eigenschaften von der Extruderdüse einer Blasformmaschine zugeführt wird. Durch diese Verfahrensweise ist es möglich, den intrinsischen Kunststoff gleichsam als Konzentrat einzusetzen und im Extruder mit einem geringen Volumenanteil eine homogene Mischung mit dem Basiskunststoff zu erstellen, die dann in der Blasformmaschine weiterverarbeitet werden kann.

In zweckmäßiger Ausgestaltung des erfindungsgemäßen Verfahrens ist hierbei vorgesehen, daß das Kunststoffmaterial mit intrinsischen Eigenschaften zur Bildung einer dünnen Beschichtung der Wandung des im Blasformverfahren herzustellenden Behälters mit dem zur Bildung einer tragenden Basisschicht als schlauchförmiger Rohling koextrudiert wird, der der Blasformmaschine zugeführt wird. Durch diese Maßnahme ist eine einwandfreie Verbindung zwischen der dünnen Beschichtung und der Basisschicht gewährleistet.

In vorteilhafter Ausgestaltung des erfindungsgemäßen Verfahrens ist ferner vorgesehen, daß das Master-Batch des intrinsischen Kunststoffs wenigstens ein als Haftvermittler in bezug auf den verwendeten Basiskunststoff wirkenden Zusatz enthält. Damit wird eine zuverlässige Verbindung zwischen der Beschichtung und der Basisschicht beim Zusammenführen beider Materialien in der Extruderdüse zur Bildung eines schlauchförmigen Rohlings noch verbessert.

In einer vorteilhaften Ausgestaltung des Verfahrens ist ferner vorgesehen, daß der Anteil an Kunststoff mit intrinsischen Eigenschaften zumindest teilweise durch aufgearbeitetes Kunststoffmaterial gebildet wird, das bei der Versäuberung der jeweils fertig geformten Behälter anfällt. Bei Transportbehältern, die in der bisherigen Technik mit einer elektrisch-leitenden, mit Leitruß versetzten Außenschicht versehen waren, wurden die beim Versäubern anfallenden Abfälle in den Kunststoff zur Herstellung der Basisschicht eingearbeitet, was dann zur Folge hatte, daß zum Schutz der Basisschicht gegen chemische Einwirkungen durch die in den Behälter eingefüllten Stoffe die Basisschicht noch mit einer chemisch widerstandsfähigen Innenschicht versehen werden mußten. Da gemäß der Erfindung die Außenbeschichtung aus einer Mischung des für die Basisschicht verwendeten Kunststoffs mit einem intrinsischen Kunststoff besteht, wobei der intrinsische Kunststoff mit nur einem verhältnismäßig geringen Volumenanteil in diesem Kunststoffmaterial enthalten ist, kann der bei der Versäuberung entstehende Abfall in üblicher weise granuliert werden und nach Erfahrungswerten durch die weitere Zumischung von einem noch geringen Anteil des als Master-Batch vorliegenden intrinsischen Kunststoffs in bezug auf die Anforderungen an die Eigenleitfähigkeit entsprechend "aufgebessert" und erneut zur Herstellung der Außenschicht verwendet werden. Hierdurch ergibt sich zum einen eine weitere Kostenersparnis und zum anderen der Vorteil, daß zur Herstellung der tragenden Basisschicht des Behälters ein genuiner, vorzugsweise fabrikationsfrischer, nicht-leitender Kunststoff, beispielsweise HDPE verwendet werden kann und dementsprechend eine zuverlässige Gewährleistung für die Festigkeit und Tragfähigkeit eines derartigen Behälters gegeben werden kann.

Weitere Merkmale der Erfindung sind der nachstehenden Beschreibung von Ausführungsbeispielen und den Ansprüchen zu entnehmen.

Die Erfindung wird anhand schematischer Zeichnungen näher erläutert. Es zeigen:
- Fig. 1: eine Behälteranordnung mit einem Kunststoffbehälter auf einem palettenartigen Untergestell mit Schutzgitter,
- Fig. 2: einen Teil-Vertikalschnitt durch die Wandung eines zweischichtigen Kunststoffbehälters in größerem Maßstab,
- Fig. 3: das Herstellungsverfahren in Form eines schematischen Fließbildes.

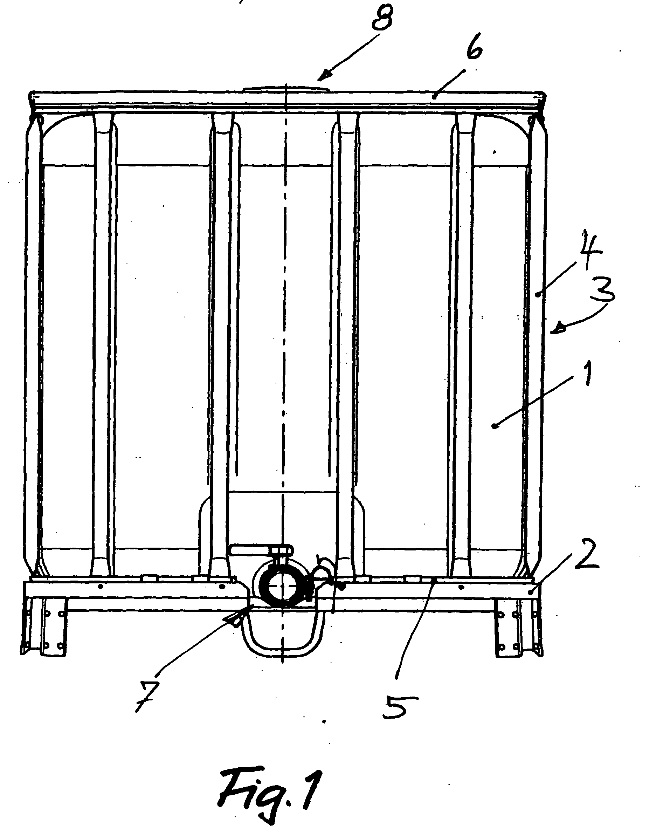

Die in Fig. 1 dargestellte Behälteranordnung besteht im wesentlichen aus einem verschließbaren kubischen Behälter 1 aus Kunststoff, der auf einem palettenartigen Untergestell 2 aus einem elektrisch-leitfähigen Material, beispielsweise aus Stahl oder Kunststoff aufsteht. Mit dem palettenartigen Untergestell 2 ist zum Schutz des Behälters 1 gegen mechanische Einwirkung ein Schutzgitter 3 verbunden, das im wesentlichen aus einer Reihe von vertikalen Stäben 4 besteht, die jeweils am unteren Ende mit einem Rahmen 5 und am oberen Ende mit einem Rahmen 6 fest verbunden sind. Statt eines derartigen Stabgitters sind auch Schutzgitter mit sich kreuzenden Gitterstäben einsetzbar. Der Behälter 1 ist in Höhe seines Bodens mit einem Ablaufventil 7 versehen. Die Behälterdecke ist mit einem Einfüllstutzen versehen, der mittels eines Schraubdeckels 8 verschließbar ist.

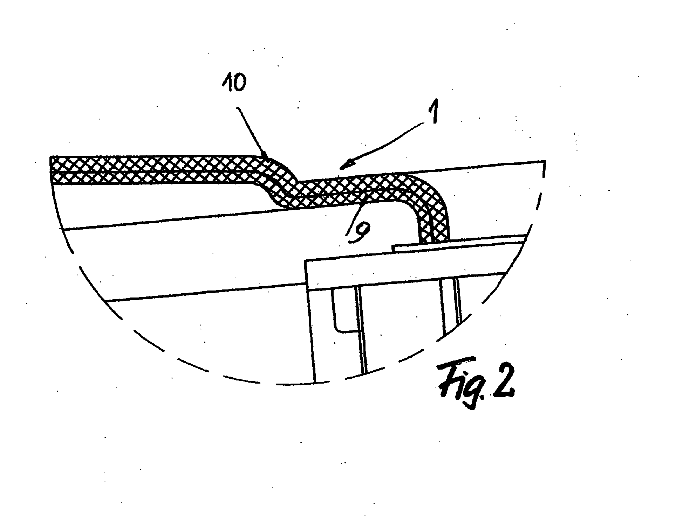

In Fig. 2 ist in vergrößerter Darstellung ein Teilschnitt durch die Behälterwandung dargestellt. Wie die Zeichnung erkennen lässt, ist die Wandung des Behälters 1 zweischichtig aufgebaut, und zwar mit einer Basisschicht 9 aus einem chemisch widerstandsfähigen, elektrisch nichtleitenden Kunststoff, beispielsweise einem High-density-Polyethylen, und einer die Basisschicht 9 umschließenden Außenschicht 10 aus einem Kunststoffmaterial mit intrinsischen Eigenschaften, die aufgrund des angewendeten Koextrusionsverfahrens fest mit der Basisschicht verbunden ist.

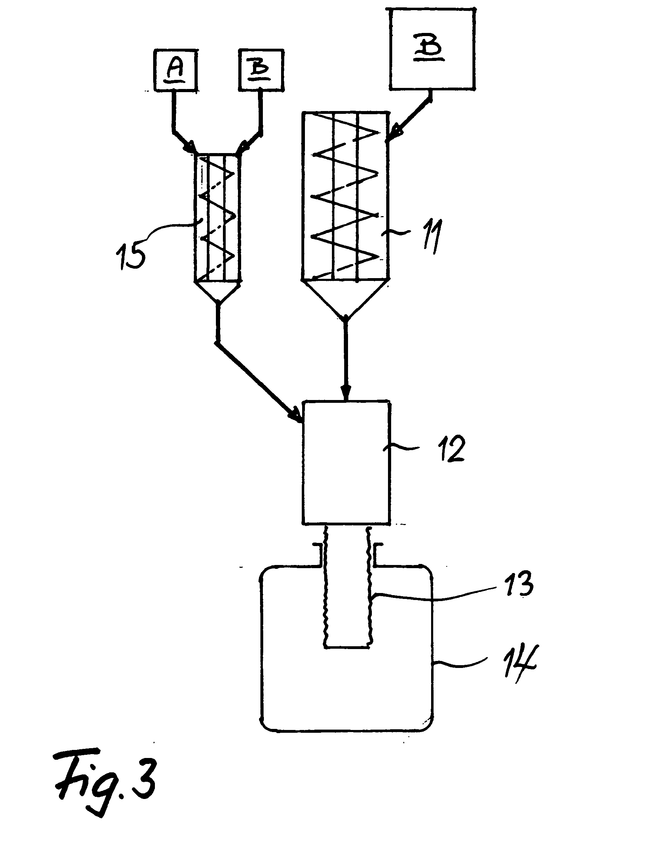

Wie aus dem in Fig. 3 schematisch wiedergegebenen Fließbild ersichtlich, wird der zweischichtige Kunststoffbehälter 1 im Wege des Blasextrusionsverfahrens hergestellt. Hierbei wird der einem Hauptextruder 11 zugeführte Basiskunststoff B entsprechend aufgeschmolzen und einer Ringdüse 12 zugeführt, in der ein schlauchförmiger Rohling 13 erzeugt wird, der dann in eine Blasform 14 eingegeben und zu einem Behälter umgeformt wird.

Zur Herstellung des als Außenschicht auf den schlauchförmigen Rohling aufzubringenden Kunststoffmaterials mit intrinsischen Eigenschaften wird einem zweiten Extruder 15 wiederum Basismaterial B zugeführt, zusätzlich aber mit einer entsprechenden volumetrischen Dosierung der intrinsische Kunststoff A als Masterbatch zugeführt. Beide Kunststoffe A und B werden im Extruder 15 homogen vermischt, wobei der Extruder 15 in Bezug auf Druck und Temperatur so eingestellt ist, dass der intrinsische Kunststoff in seiner Struktur nicht geschädigt wird. Durch die homogene Vermischung beider Kunststoffe im Extruder 15 entsteht ein Kunststoffmaterial mit intrinsischen Eigenschaften, das als vorzugsweise dünne Außenschicht in der Ringdüse 12 auf den die Basisschicht bildenden Basiskunststoff aufgebracht wird, wobei ein homogener Verbund zwischen beiden Kunststoffschichten entsteht. Der so gebildete zweischichtige schlauchförmige Rohling 13 wird dann in der Blasform 14 in die gewünschte Behälterform umgeformt.

Die Dicke der aus dem Kunststoffmaterial mit intrinsischen Eigenschaften auf den Basiskunststoff aufgebrachten Außenschicht muß so bemessen werden, daß am fertigen Behälter in den blastechnischen "Problemzonen" eine Mindestschichtdicke erhalten bleibt.

Die volumetrische Zumessung des Kunststoffs A mit intrinsischen Eigenschaften zum Basiskunststoff B kann bis zu 50 Vol.-% betragen. Zweckmäßig und ausreichend sind jedoch deutlich geringere Anteile des Kunststoffs A in der Mischung.

In diesem Zusammenhang kann es bei der Verwendung eines hellen, durchscheinenden high-density-Polyethylens als Basiskunststoff für die Basisschicht zweckmäßig sein, die aus dem Kunststoffmaterial mit intrinsischen Eigenschaft bestehende Außenschicht geringfügig einzufärben, so daß eine optisch einfach nachprüfbare Garantie dafür gegeben werden kann, daß die elektrisch-leitende Außenschicht des Behälters diesen vollflächig umschließt. Der maximal mögliche Grad der Einfärbung ergibt sich aus der Anforderung, daß die Wandungen des beschichteten Behälters noch lichtdurchscheinend sein müssen, damit eine allseitige optische Füllstandskontrolle möglich ist. Da die Abfälle aus der Versäuberung des fertigen Behälters als Granulat aufgearbeitet und bei der Herstellung des Kunststoffmaterials mit intrinsischen Eigenschaften wiederverwertet werden, bestehen durch die Einfärbung keinerlei Nachteile.

Bei der Verwendung von Abfällen aus der Endbearbeitung werden diese dem Extruder 15 anstelle von "reinem" Basismaterial B zugeführt, wobei dann bei der Aufbereitung der Abfälle durch entsprechende Prüfung von Proben, beispielsweise durch Leitfähigkeitsmessungen, der Gehalt an intrinsischen Kunststoffen zu ermitteln ist. Die Zufuhr von "reinem" Kunststoff A (Master-Batch) kann dann entsprechend angepaßt werden. Zweckmäßig ist es, wenn bei der Aufbereitung von Abfällen die anfallenden Mengen in größeren Partien gesammelt und beispielsweise in Form eines Granulats homogenisiert werden.

## Patentansprüche

1. Gegen elektrostatische Aufladung geschützte Behälteranordnung für Transport und Lagerung von fließfähigen Stoffen mit einem palettenartigen Untergestell (2) aus einem elek-trisch leitfähigen Material und einem damit verbundenen Schutzgitter (3) aus einem elektrisch leitfähigen Material, das die Seitenwände des Behälters (1) umschließt, und dessen Wandungen durch die Herstellung im Blasverfahren mehrschichtig aufgebaut sind und aus einer tragenden Basisschicht (9) und zumindest einer Schicht (10) aus einem Kunststoffmaterial mit elektrisch eigenleitenden (intrinsischen) Eigenschaften bestehen, **dadurch gekennzeichnet, dass** das Kunststoffmaterial mit intrinsischen Eigenschaften aus einer Mischung eines elektrisch nichtleitenden Kunststoffs als Basiskunststoff mit einem intrinsischen Kunststoff besteht.

2. Behälteranordnung nach Anspruch 1, **dadurch gekennzeichnet, dass** als Basiskunststoff ein Polyethylen verwendet wird.

3. Behälteranordnung nach Anspruch 2, **dadurch gekennzeichnet, dass** als Basiskunststoff ein High-density-Polyethylen (HDPE) verwendet wird.

4. Behälteranordnung nach einem der Ansprüche 1 bis 3, **dadurch gekennzeichnet, dass** der Anteil des intrinsischen Kunststoffs an dem aus dem Basiskunststoff und dem intrinsischen Kunststoff bestehenden Kunststoffmaterial bis zu 50 Vol.-% beträgt.

5. Behälteranordnung nach einem der Ansprüche 1 bis 3, **dadurch gekennzeichnet, dass** der Anteil des intrinsischen Kunststoffs an dem aus dem Basiskunststoff und dem intrinsischen Kunststoff bestehenden Kunststoffmaterial bis zu 40 Vol.-% beträgt.

6. Behälteranordnung nach einem der Ansprüche 1 bis 3, **dadurch gekennzeichnet, dass** der Anteil des intrinsischen Kunststoffs an dem aus dem Basiskunststoff und dem intrinsischen Kunststoff bestehenden Kunststoffmaterial bis zu 30 Vol.-% beträgt.

7. Behälteranordnung nach einem der Ansprüche 1 bis 3, **dadurch gekennzeichnet, dass** der Anteil des intrinsischen Kunststoffs an dem aus dem Basiskunststoff und dem intrinsischen Kunststoff bestehenden Kunststoffmaterial bis zu 20 Vol.-% beträgt.

8. Behälteranordnung nach einem der Ansprüche 1 bis 3, **dadurch gekennzeichnet, dass** der Anteil des intrinsischen Kunststoffs an dem aus dem Basiskunststoff und dem intrinsischen Kunststoff bestehenden Kunststoffmaterial bis zu 15 Vol.-% beträgt.

9. Behälteranordnung nach einem der Ansprüche 1 bis 3, **dadurch gekennzeichnet, dass** der Anteil des intrinsischen Kunststoffs an dem aus dem Basiskunststoff und dem intrinsischen Kunststoff bestehenden Kunststoffmaterial bis zu 10 Vol.-% beträgt.

10. Behälteranordnung nach einem der Ansprüche 1 bis 3, **dadurch gekennzeichnet, dass** der Anteil des intrinsischen Kunststoffs an dem aus dem Basiskunststoff und dem intrinsischen Kunststoff bestehenden Kunststoffmaterial bis zu 5 Vol.-% beträgt.

11. Behälteranordnung nach einem der Ansprüche 1 bis 10, **dadurch gekennzeichnet, dass** die Basisschicht aus dem gleichen nichtleitenden Kunststoff besteht, der auch in dem Kunststoffmaterial mit intrinsischen Eigenschaften enthalten ist.

12. Behälteranordnung nach einem der Ansprüche 1 bis 11, **dadurch gekennzeichnet, dass** der nichtleitende Kunststoff und das Kunststoffmaterial mit intrinsischen Eigenschaften lichtdurchscheinend ist.

13. Verfahren zur Herstellung eines Transportbehälters für eine Behälteranordnung gemäß den Ansprüchen 1 bis 12 unter Verwendung eines Kunststoffmaterials mit elektrisch eigenleitenden (intrinsischen) Eigenschaften, **dadurch gekennzeichnet, dass** ein Anteil eines intrinsischen Kunststoffs als Masterbatch mit einem Anteil eines elektrisch nichtleitenden Basiskunststoffs in einem vorgebbaren Volumenverhältnis in einem Extruder (15) zu dem Kunststoffmaterial mit intrinsischen Eigenschaften gemischt wird, und dass das durch die Mischung gebildete Kunststoffmaterial mit intrinsischen Eigenschaften vom Extruder (15) einer Blasformmaschine zugeführt wird.

14. Verfahren nach Anspruch 13, **dadurch gekennzeichnet, dass** das Kunststoffmaterial mit intrinsischen Eigenschaften zur Bildung einer dünnen Beschichtung der Wandung des im Blasformverfahren herzustellenden Behälters mit dem zur Bildung einer tragenden Basisschicht als schlauchförmiger Rohling (13) koextrudiert wird, der der Blasformmaschine zugeführt wird.

15. Verfahren nach Anspruch 13 oder 14, **dadurch gekennzeichnet, dass** der Masterbatch des intrinsischen Kunststoffs wenigstens einen als Haftvermittler in Bezug auf den verwendeten Basiskunststoff wirkenden Zusatz enthält.

16. Verfahren nach einem der Ansprüche 13 bis 15, **dadurch gekennzeichnet, dass** zur Herstellung des Kunststoffmaterials mit intrinsischen Eigenschaften zumindest teilweise aufgearbeitetes Kunststoffmaterial verwendet wird, das bei der Versäuberung der jeweils fertig geformten Behälter anfällt, und dass Kunststoff mit intrinsischen Eigenschaften als Masterbatch nur noch in einer solchen Menge zugeführt wird, die für die Einhaltung einer vorgegebenen Leitfähigkeit erforderlich ist.

## Claims

1. A containter system for transport and storage of free-flowing substances which is shielded against electrostatic charge and has a pallet-like lower frame (2) made of an electrically conductive material and, connected thereto, a protective guard (3) made of an electrically conductive material enclosing the side walls of said container (1), and the walls of which are constructed in a multilayered way due to being manufactured through blow moulding and consist of a supporting base layer (9) and at least one layer (10) made of a plastic material having electrically self-conducting (intrinsic) properties, **characterized in that** said plastic material having intrinsic properties consists of a mixture of an electrically non-conductive plastic as base plastic with an intrinsic plastic.

2. A container system according to claim 1, **characterized in that** a polyethylene is used as base plastic.

3. A container system according to claim 2, **characterized in that** as base plastic a high-density polyethylene (HDPE) is used.

4. A container system according to any of claims 1 to 3, **characterized in that** the proportion of said intrinsic plastic in said plastic material, which is made of said base plastic and said intrinsic plastic, amounts to up to 50 percent by volume.

5. A container system according to any of claims 1 to 3, **characterized in that** the proportion of said intrinsic plastic in said plastic material, which is made of said base plastic and said intrinsic plastic, amounts to up to 40 percent by volume.

6. A container system according to any of claims 1 to 3, **characterized in that** the proportion of said intrinsic plastic in said plastic material, which is made of said base plastic and said intrinsic plastic, amounts to up to 30 percent by volume.

7. A container system according to any of claims 1 to 3, **characterized in that** the proportion of said intrinsic plastic in said plastic material, which is made of said base plastic and said intrinsic plastic, amounts to up to 20 percent by volume.

8. A container system according to any of claims 1 to 3, **characterized in that** the proportion of said intrinsic plastic in said plastic material, which is made of said base plastic and said intrinsic plastic, amounts to up to 15 percent by volume.

9. A container system according to any of claims 1 to 3, **characterized in that** the proportion of said intrinsic plastic in said plastic material, which is made of said base plastic and said intrinsic plastic, amounts to up to 10 percent by volume.

10. A container system according to any of claims 1 to 3, **characterized in that** the proportion of said intrinsic plastic in said plastic material, which is made of said base plastic and said intrinsic plastic, amounts to up to 5 percent by volume.

11. A container system according to any of claims 1 to 10, **characterized in that** said base layer is made of the same non-conductive plastic which is also contained in said plastic material having intrinsic properties.

12. A container system according to any of claims 1 to 11, **characterized in that** said non-conductive plastic and said plastic material having intrinsic properties is translucent.

13. A method for manufacturing a transport container for a container system according to claims 1 to 12 using a plastic material having electrically self-conducting (intrinsic) properties, **characterized in that** a proportion of an intrinsic plastic as master batch with a proportion of an electrically non-conductive base plastic in a volume ratio able to be predetermined is added by mixing in an extruder (15) to said plastic material having intrinsic properties, and that the plastic material which has intrinsic properties and is generated through said mixing is supplied from extruder (15) to a blow-ramming moulding machine.

14. A method according to claim 13, **characterized in that** said plastic material having intrinsic properties for forming a thin coating on the wall of said container to be manufactured through blow moulding is co-extruded with the one for forming a supporting base layer as tubular preform (13) which is supplied to said blow-ramming moulding machine.

15. A method according to claim 13 or 14, **characterized in that** said master batch of said intrinsic plastic contains at least one admixture acting as adhesive agent with respect to said base plastic used.

16. A method according to any of claims 13 to 15, **characterized in that** for manufacturing said plastic material having intrinsic properties at least partially reprocessed plastic material is used which accumulates during the finishing process of the fully formed containers, and that plastic with intrinsic properties as master batch is supplied only in an amount required for maintaining the pre-determined conductivity.

## Revendications

1. Ensemble conteneur protégé contre les charges électrostatiques, pour le transport et le stockage de substances fluides, muni d'un support de type palette (2) en matériau électroconducteur et d'une grille de protection (3) en matériau électroconducteur reliée avec celui-ci qui entoure les parois latérales du conteneur (1), et dont les parois sont fabriquées en plusieurs couches par soufflage et sont constituées d'une couche de base portante (9) et d'au moins une couche (10) en matière plastique dotée de propriétés (intrinsèques) de conduction électrique, **caractérisé en ce que** la matière plastique dotée de propriétés intrinsèques est constituée d'un mélange d'un plastique non électroconducteur comme plastique de base avec un plastique intrinsèque.

2. Ensemble conteneur selon la revendication 1, **caractérisé en ce qu'**un polyéthylène est utilisé comme plastique de base.

3. Ensemble conteneur selon la revendication 1, **caractérisé en ce qu'**un polyéthylène à haute densité (DHPE) est utilisé comme plastique de base.

4. Ensemble conteneur selon l'une quelconque des revendications 1 à 3, **caractérisé en ce que** la proportion de plastique intrinsèque par rapport au plastique de base et à la matière plastique constituée de plastique intrinsèque atteint jusqu'à 50 % en volume.

5. Ensemble conteneur selon l'une quelconque des revendications 1 à 3, **caractérisé en ce que** la proportion de plastique intrinsèque par rapport au plastique de base et à la matière plastique constituée de plastique intrinsèque atteint jusqu'à 40 % en volume.

6. Ensemble conteneur selon l'une quelconque des revendications 1 à 3, **caractérisé en ce que** la proportion de plastique intrinsèque par rapport au plastique de base et à la matière plastique constituée de plastique intrinsèque atteint jusqu'à 30 % en volume.

7. Ensemble conteneur selon l'une quelconque des revendications 1 à 3, **caractérisé en ce que** la proportion de plastique intrinsèque par rapport au plastique de base et à la matière plastique constituée de plastique intrinsèque atteint jusqu'à 20 % en volume.

8. Ensemble conteneur selon l'une quelconque des revendications 1 à 3, **caractérisé en ce que** la proportion de plastique intrinsèque par rapport au plastique de base et à la matière plastique constituée de plastique intrinsèque atteint jusqu'à 15 % en volume.

9. Ensemble conteneur selon l'une quelconque des revendications 1 à 3, **caractérisé en ce que** la proportion de plastique intrinsèque par rapport au plastique de base et à la matière plastique constituée de plastique intrinsèque atteint jusqu'à 10 % en volume.

10. Ensemble conteneur selon l'une quelconque des revendications 1 à 3, **caractérisé en ce que** la proportion de plastique intrinsèque par rapport au plastique de base et à la matière plastique constituée de plastique intrinsèque atteint jusqu'à 5 % en volume.

11. Ensemble conteneur selon l'une quelconque des revendications 1 à 10, **caractérisé en ce que** la couche de base est constituée du plastique non conducteur qui est aussi contenu dans la matière plastique dotée de propriétés intrinsèques.

12. Ensemble conteneur selon l'une quelconque des revendications 1 à 11, **caractérisé en ce que** le plastique non conducteur et la matière plastique dotée de propriétés intrinsèques sont translucides.

13. Procédé de production d'un conteneur de transport pour un ensemble conteneur selon les revendications 1 à 12 au moyen d'une matière plastique dotée de propriétés (intrinsèques) de conduction électrique, **caractérisé en ce qu'**une proportion d'un plastique intrinsèque faisant office de mélange maître est mélangée avec une proportion d'un plastique de base non électroconducteur dans un rapport de volume prédéfinissable, dans une extrudeuse (15), pour donner la matière plastique dotée de propriétés intrinsèques, et **en ce que** la matière plastique dotée de propriétés intrinsèques formée par le mélange est introduite par l'extrudeuse (15) dans une machine à souffler.

14. Procédé selon la revendication 13, **caractérisé en ce que** la matière plastique dotée de propriétés intrinsèques destinée à former un revêtement mince de la paroi du conteneur à fabriquer par soufflage est co-extrudée avec l'ébauche en forme de tuyau (13) destinée à former une couche de base portante qui est introduite dans la machine à souffler.

15. Procédé selon la revendication 13 ou 14, **caractérisé en ce que** le mélange maître de plastique intrinsèque contient au moins un additif faisant office d'agent adhésif par rapport au plastique de base utilisé.

16. Procédé selon l'une quelconque des revendications 13 à 15, **caractérisé en ce que** pour fabriquer la matière plastique dotée de propriétés intrinsèques, est utilisée au moins en partie une matière plastique recyclée qui est obtenue lors du nettoyage des conteneurs déjà fabriqués, et **en ce que** le plastique doté de propriétés intrinsèques faisant office de mélange maître n'est plus introduit que dans une quantité qui est nécessaire pour respecter une conductivité prédéfinie.
